# EUROPÄISCHE PATENTANMELDUNG

(11) **EP 2 453 216 A1**
(43) Veröffentlichungstag der Anmeldung: **16.05.2012**
(21) Anmeldenummer: 11187710.6
(22) Anmeldetag: 03.11.2011
(51) Int. Cl.: G01G 21/23

(54) **Waagenkompensator**

(30) Priorität: 15.11.2010 DE 102010060556
(71) Anmelder: Bayerische Waagenbau Werkstätte - Althaus GmbH, 86919 Utting a.A. (DE)
(72) Erfinder: Althaus, Johann, 86919 Utting a.A. (DE)
(74) Vertreter: Winter, Brandl, Fürniss, Hübner, Röss, Kaiser, Polte - Partnerschaft

(57) **Zusammenfassung**

Kompensatoranordnung 2 mit einem Kompensator 6 zum Verbinden von zwei Strömungsabschnitten 4, 8 und zum Ausgleichen von Relativbewegungen zwischen den Strömungsabschnitten 4, 8 zumindest innerhalb eines vorbestimmten Ausgleichsbereichs ΔLₘₐₓ. Der Kompensator 6 ist zwischen einem Austritt 16 des stromaufwärtigen Strömungsabschnitts 4 und einem Eintritt 28 des stromabwärtigen Strömungsabschnitts 8 angeordnet. Er besteht aus einem biegeschlaffen Material, ist im Wesentlichen schlauchförmig ausgebildet und weist mindestens eine solche Länge auf, dass ein umgestülpter Abschnitt 32 des Kompensators 6 in den stromabwärtigen Strömungsabschnitt 8 hineinragt und über den gesamten vorbestimmten Ausgleichsbereich darin verbleibt.

## Beschreibung

Die Erfindung bezieht sich auf eine Kompensatoranordnung mit einem Kompensator zum Verbinden von zwei Strömungsabschnitten und zum Ausgleichen von Relativbewegungen zwischen diesen gemäß dem Oberbegriff des Anspruchs 1, einen entsprechenden Kompensator gemäß dem Oberbegriff des Anspruchs 8 sowie einem Verfahren zum Montieren eines Kompensator zwischen zwei Strömungsabschnitten gemäß dem Oberbegriff des Anspruchs 10.

### Stand der Technik

Weichstoffkompensatoren zur Verbindung von Rohrleitungen sind aus dem Stand der Technik bekannt. Dabei handelt es sich in der Regel um Leitungs- oder Kanalbauteile, die aus technischen Geweben oder Elastomeren hergestellt sind. Eine mögliche Anwendung von Weichstoffkompensatoren ist der Einsatz als Waagenkompensator, bei dem eine Zuleitung zur Förderung von schüttfähigen Materialien über einen Weichstoffkompensator mit einem Wägebehälter verbunden wird. Durch den Weichstoffkompensator, im Folgenden auch als Kompensator bezeichnet, wird zum einen ein seitliches Austreten von Schüttgut und gegebenenfalls Staub- und Flüssigkeitspartikeln während des Befüllvorgangs vermieden und zum anderen werden Relativbewegungen der Abschnitte zueinander, wie z. B. ein Absenken des Wägebehälters, ausgeglichen.

So ist beispielsweise aus der Druckschrift DE 20 2008 012 645 U1 ein Waagenkompensator bekannt, der zwei zylindrische Endabschnitte mit gleichem Öffnungsquerschnitt und einen dazwischen angeordneten Mittelabschnitt aufweist, der sich in Strömungsrichtung zunächst aufweitet und anschließend trichterförmig verjüngt. Durch diese Ausgestaltung ist ein Ausgleich von Längsbewegungen zwischen zwei Rohrabschnitten durch eine elastische Verformung des aufgeweiteten Mittelabschnitts möglich. Ein Ausgleich von Bewegungen in Querrichtung ist mit dieser Anordnung hingegen nur bedingt oder gar nicht möglich.

Aus der Druckschrift DE 43 32 030 A1 ist weiterhin eine Vorrichtung zur gravimetrischen Dosierung von Schüttgütern bekannt, bei dem ein Wägebehälter über einen Kompensator in Form eines Faltenbalgs mit einer Zuleitung verbunden ist.

Das Gebrauchsmuster DE 85 24 937 U zeigt ein flexibles Verbindungselement für einen Wägebehälter zum Anschluss des Behälters an eine Wägegutzuführung oder Wägegutabführung, mit einem Balgteil und zwei Anschlussteilen, von denen ein Anschlussteil mit dem Wägebehälter und das zweite Anschlussteil mit einem feststehenden Bauteil der Wägegutzuführung oder der Wägegutabführung verbindbar ist. Das Balgteil ist in Fliessrichtung des Wägegutes gesehen am Anschlussteil der Einlaufseite des Verbindungselements angeordnet und erstreckt sich radial nach außen erstreckt. An das Balgteil schließt sich ein zylinder- oder trichterförmiges Zwischenstück an, das in das Anschlussteil an der Auslaufseite des Verbindungselements übergeht.

Ein grundlegendes Problem bei Waagenkompensatoren der bekannten Bauarten besteht jedoch darin, dass diese zwar Relativbewegungen zwischen den beiden Strömungsabschnitten ausgleichen können, dies jedoch nicht kräftefrei erfolgt. Der Ausgleich bedarf stets einer Materialdehnung bzw. -stauchung des zwischen den Strömungsabschnitten angeordneten Kompensators. Selbst bei sehr weichen, biege-und dehnbaren Materialen kann ein Kräftefluss zwischen den Strömungsabschnitten nicht in dem Maße entkoppelt werden, wie es für ein genaues Messergebnis der Wägevorrichtung wünschenswert wäre.

Ferner kommt es in der Praxis, insbesondere an Stellen, an denen der Kompensator aufgeweitet und anschließend wieder verjüngt ist, häufig zu Ablagerungen von Schüttgut. Solche Ablagerungen können bis zu einem Verstopfen der Zuleitung oder zum Verlust von Schüttgut führen und müssen zudem in einem zusätzlichen Arbeitsgang wieder aus den Kompensatoren entfernt werden. Insbesondere bei der Förderung von unterschiedlichen Stoffen ist eine Reinigung des Kompensators dazwischen erforderlich.

Der Erfindung liegt daher die Aufgabe zugrunde, eine Kompensatoranordnung bereitzustellen, die eine Entkopplung von Kräften zwischen einem stromaufwärts eines Kompensators gelegenen Strömungsabschnitt und einem stromabwärts des Kompensators gelegenen Strömungsabschnitt eines Zuleitungssystems ermöglicht, die bei Relativbewegungen der Strömungsabschnitte, insbesondere in Längs- und Querrichtung, entstehen können. Weiterhin sollen keine Ablagerungen von Schüttgut in dem Kompensator entstehen können. Ein weiteres Ziel ist es, ein Austreten oder Eintreten von beispielsweise Staub- oder Flüssigkeitspartikeln zu vermeiden.

Ferner liegt der Erfindung die Bereitstellung eines entsprechend geeigneten Kompensators sowie ein Verfahren zur Montage eines solchen Kompensators zwischen zwei Strömungsabschnitten als Aufgabe zugrunde.

Hinsichtlich der Kompensatoranordnung wird die Aufgabe durch die Merkmale des Anspruchs 1 gelöst.

Erfindungsgemäß ist eine Kompensatoranordnung mit einem Kompensator zum Verbinden von zwei Strömungsabschnitten und zum Ausgleichen von Relativbewegungen zwischen den Strömungsabschnitten zumindest innerhalb eines vorbestimmten Ausgleichsbereichs vorgesehen. Der zwischen einem Austritt des stromaufwärtigen Strömungsabschnitts und einem Eintritt des stromabwärtigen Strömungsabschnitts angeordnete Kompensator besteht dabei aus einem biegeschlaffen Material, ist im Wesentlichen schlauchförmig ausgebildet und weist mindestens eine solche Länge auf, dass ein umgestülpter Abschnitt des Kompensators in den stromabwärtigen Strömungsabschnitt hineinragt und über den gesamten vorbestimmten Ausgleichsbereich darin verbleibt.

Da der Kompensator aus einem biegeschlaffen Material besteht und schlauchförmig ausgebildet ist, lässt sich dieser umstülpen. Durch das Umstülpen des schlauchförmigen Abschnitts wird gewährleistet, dass keine Kräfte übertragen werden, da ein umgestülpter Schlauch aus biegeschlaffem Material in einer Längsrichtung des Schlauches weder eine Zugkraft noch eine Druckkraft übertragen kann. Relativbewegungen der Strömungsabschnitte in Längsrichtung werden in ein kräftefreies Abrollen des umgestülpten Abschnitts umgesetzt, anstatt zu angrenzenden Bauteilen weitergeleitet zu werden. Material und Wandstärke des Kompensators sind entsprechend gewählt.

Ebenso können Relativbewegungen der Endabschnitte in Querrichtung innerhalb eines Ausgleichbereichs kräftefrei ausgeglichen werden, da der in den stromabwärtigen Strömungsabschnitt hineinragende Teil des Kompensators Querbewegungen ausgleichen kann, ohne dass Teile des Kompensators gestreckt oder gedehnt werden müssen. Ebenso können mit einem so ausgeführten Kompensator verschiedene Relativbewegungen zwischen den Strömungsabschnitten wie z.B. axiale Stauchungen oder Streckungen, lateraler Versatz, Winkelversatz oder Torsionen bis zu einem gewissen Grad ausgeglichen werden. Darüber hinaus kann auch eine Vibrationsdämpfung bzw. eine akustische oder eine thermischen Entkopplung zwischen den Strömungsabschnitten erfolgen.

Weiterhin ist ein Ablagern von Schüttgut bzw. Staub- oder Flüssigkeitspartikeln nicht möglich, da der mit gefördertem Gut in Berührung kommende Abschnitt des Kompensators keine Absätze oder Vorsprünge aufweist. Das umgestülpte Ende bildet weiterhin eine definierte Abrisskante aus, die Wirbelbildungen oder andere Strömungsstörungen verhindert.

Ein bei Anlagen zur Förderung von Schüttgut häufig auftretendes Phänomen ist die so genannte Brückenbildung, d.h. ein Verklemmen von geförderten Materialpartikeln untereinander sowie zwischen Wandungen der Förderleitung, durch welches die Leitung verstopft werden kann.

Eine solche Brückenbildung wird ebenfalls durch die Kompensatoranordnung gemäß den Merkmalen des Anspruchs 1 verhindert, da die mit der Strömung in Berührung kommenden Teile des Kompensators durch die flexiblen Eigenschaften des verwendeten Materials radial nach außen ausweichen und sich Gutbrücken somit nicht ausbilden können.

Zudem lässt die Kompensatoranordnung einen großen Spielraum bei der Ausgestaltung der Befestigung des stromabwärtigen Befestigungsabschnitts an dem stromabwärtigen Strömungsabschnitts zu, da der Befestigungsabschnitt in radialer Richtung durch den umgestülpten Teil verdeckt wird. So ist es z.B. möglich, den Kompensator außerhalb oder innerhalb des Eintritts am stromabwärtigen Strömungsabschnitt zu befestigen. Positionierungsungenauigkeiten des Kompensators am stromabwärtigen Strömungsabschnitt werden durch den in den Strömungsabschnitt hineinragenden umgestülpten Abschnitt kaschiert.

Der erfindungsgemäße Kompensator ermöglicht einen Ausgleich von Relativbewegungen bei einer gleichzeitigen geschlossenen Verbindung zwischen den beiden Strömungsabschnitten, so dass ein Austritt von z.B. Staub- oder Flüssigkeitspartikeln oder ein Eintritt von Fremdkörpern sicher verhindert werden können. Bei entsprechender Materialwahl, z.B. Silikon, und einer entsprechenden Befestigung des Kompensators an den beiden Strömungsabschnitten können die Strömungsabschnitte nicht nur staubdicht und spritzwasserdicht, sondern auch wasserdicht mittels der erfindungsgemäßen Kompensatoranordnung verbunden werden.

Weitere vorteilhafte Ausgestaltungen sind Gegenstand der Unteransprüche.

Entsprechend einer weiteren bevorzugten Weiterbildung der vorliegenden Erfindung kann der Austritt des stromaufwärtigen Strömungsabschnitts einen kleineren Öffnungsquerschnitt aufweisen als der Eintritt des stromabwärtigen Strömungsabschnitts. Dadurch wird erreicht, dass selbst bei Relativbewegungen quer zur Strömungsrichtung der Strömungsquerschnitt des stromaufwärtigen Strömungsabschnitts noch immer innerhalb des Strömungsquerschnitts des stromabwärtigen Strömungsabschnitts liegt und die Strömung durch den Kompensator nicht wesentlich umgelenkt werden muss.

Wenn zur Überbrückung dieser Strömungsabschnitte unterschiedlichen Öffnungsquerschnitts ein entsprechend konisch ausgebildeter Kompensator verwendet wird, hat dies den Vorteil, dass keine oder keine wesentliche Querschnittsverjüngung durch den Kompensator erfolgt, obwohl in den stromabwärtigen Strömungsabschnitt der umgestülpte Abschnitt des Kompensators hineinragt. Dadurch wird ein noch besseres Strömungsverhalten erreicht.

Bei einer weiteren bevorzugten Weiterbildung der vorliegenden Erfindung kann der stromabwärtige Strömungsabschnitt Teil eines Wägebehälters oder mit einem Wägebehälter verbunden sein. Durch eine Verbindung des stromaufwärtigen Strömungsabschnitts über den Kompensator mit dem stromabwärtigen Strömungsabschnitt, der wiederum mit einem Wägebehälter verbunden ist, lässt sich ein Zuführungssystem für schüttfähiges Gut zu einem Wägebehälter erreichen, bei dem keine Kräfte von der Zuführung auf den Wägebehälter übertragen werden und das geförderte Gut auch nicht aus dem Zuführungssystem austreten kann. Dadurch wird ein genaues Abwägen von Schüttgut ermöglicht.

Der Kompensator lässt sich auf verschiedene Arten mit dem stromaufwärtigen Strömungsabschnitt und dem stromabwärtigen Strömungsabschnitt verbinden. Beispielsweise kann der Kompensator an seinen jeweiligen Enden Flansche aufweisen, die mit entsprechenden Flanschen an den Strömungsabschnitten verbunden werden können. Alternativ kann der Kompensator an seinen Enden jeweils einen Bund bzw. zylindrische Abschnitt aufweisen, der über entsprechende zylindrische Endabschnitte an den Strömungsabschnitten gezogen und daran z.B. mit Kabelbindern oder Schellen befestigt wird.

Besonders vorteilhaft ist jedoch eine bestimmte Kombination der beiden oben beschriebenen Befestigungsmöglichkeiten. Dabei ist am Eintritt des stromabwärtigen Strömungsabschnitts ein erster Flansch ausgebildet, an welchem ein ebenfalls flanschförmiger Abschnitt des Kompensators befestigbar ist. Am anderen Ende Kompensators ist ein Bund bzw. kreiszylindrischer Befestigungsabschnitt ausgebildet, der sich über einen rohrförmigen Austritt am stromaufwärtigen Strömungsabschnitt ziehen lässt und daran z.B. mit einem Kabelbinder oder einer Schelle befestigt werden kann.

Dies ermöglicht zum einen eine kostengünstige, einfache und schnelle Montierbarkeit des Kompensators an dem stromaufwärtigen Strömungsabschnitt und zum anderen eine sichere Befestigung am stromabwärtigen Strömungsabschnitt. Dass der Kompensator an seinem stromabwärtigen Ende einen Flansch aufweist, hat noch folgenden Vorteil. Wenn der Kompensator mit dem flanschförmigen Abschnitt so an dem Eintritt des stromabwärtigen Strömungsabschnitt montiert wird, dass zunächst der gesamte Kompensator in den stromabwärtigen Strömungsabschnitt hineinragt, dieser anschließend radial nach innen und zum stromaufwärtigen Strömungsabschnitt hin umgestülpt und an diesem befestigt wird, zeigt der Kompensatorabschnitt am Übergang vom flanschförmigen Endabschnitt zum schlauchförmigen Mittelabschnitt hin nach wie vor in Strömungsrichtung und stellt sicher, dass der umgestülpte Abschnitt nicht versehentlich aus dem stromabwärtigen Strömungsabschnitt herausrutscht, ohne dabei einem Bewegungsausgleich der beiden Strömungsabschnitte entgegenzuwirken.

Gemäß einer weiteren bevorzugten Weiterbildung der vorliegenden Erfindung kann eine Druckausgleichsvorrichtung in einem der Strömungsabschnitte oder dem Wägebehälter vorgesehen sein. Durch eine solche Druckausgleichsvorrichtung, die z.B. als Überdruckventil ausgeführt sein kann, lässt sich ein Druckunterschied zwischen einem Innenraum der Strömungsabschnitte und einem die Strömungsabschnitte umgebenden Außenraum ausgleichen, der sich durch Lageänderungen zwischen dem stromaufwärtigen Strömungsabschnitt und dem stromabwärtigen Strömungsabschnitt oder während dem Förder- bzw. Schüttvorgang aufbauen kann. Auf diese Weise kann z.B. ein Herausdrücken des umgestülpten Abschnitts aus dem stromabwärtigen Strömungsabschnitt durch einen Überdruck in den Strömungsabschnitten vermieden werden.

Einer weiteren bevorzugten Weiterbildung der vorliegenden Erfindung zufolge kann der Kompensator aus einem einzigen Material oder aus einem Verbundmaterial hergestellt sein. Dadurch lässt sich eine einfache und kostengünstige Herstellung wie z.B. durch Extrudieren oder Spritzguss aus einem Material wie z.B. Silikon oder Materialien mit ähnlichen Eigenschaften realisieren.

Hinsichtlich des Kompensators wird die Aufgabe durch die Merkmale des Anspruchs 8 gelöst.

Ein erfindungsgemäßer Kompensator, der sich zum Verbinden von zwei Strömungsabschnitten und zum Ausgleichen von Relativbewegungen der beiden innerhalb eines vorbestimmten Ausgleichsbereichs eignet, weist einen ersten Befestigungsabschnitt, der an dem stromaufwärtigen Strömungsabschnitt befestigbar ist, einen zweiten Befestigungsabschnitt, der an dem stromabwärtigen Strömungsabschnitt befestigbar ist, sowie einen konisch ausgebildeten Mittelabschnitt auf. Material und Wandstärke zumindest des Mittelabschnitts sind so gewählt, dass sich der Kompensator umstülpen lässt, wobei der Kompensator sowohl im umgestülpten als auch im nicht umgestülpten Zustand an den entsprechenden Strömungsabschnitten befestigbar ist.

Die Tatsache, dass sich der Kompensator im umgestülpten Zustand montieren lässt, ermöglicht es, dass der umgestülpte Abschnitt in den stromabwärtigen Strömungsabschnitt hineinragen kann und durch kräftefreies Abrollen des umgestülpten Abschnitt einen kräftefreien Ausgleich, insbesondere einen Längenausgleich, ermöglicht.

Vorzugsweise können die beiden Befestigungsabschnitte des Kompensators eine größere Wandstärke als der Mittelabschnitt aufweisen.

Dadurch kann sichergestellt werden, dass die Befestigungsabschnitte des Kompensators einerseits eine ausreichende Festigkeit aufweisen und der Mittelabschnitt andererseits die notwendige Flexibilität für das Umstülpen und das Abrollen des umgestülpten Abschnitts hat.

Besonders vorteilhaft ist, wenn aus den oben genannten Gründen der erste Befestigungsabschnitt zur Verbindung mit dem stromaufwärtigen Strömungsabschnitt einen Bund bzw. kreiszylindrischen Endabschnitt und der zweite Befestigungsabschnitt zur Verbindung mit dem stromabwärtigen Strömungsabschnitt einen flanschförmigen Endabschnitt aufweist.

In Hinblick auf Herstellbarkeit und Funktion ist der Kompensator einstückig, insbesondere aus Silikon, ausgebildet.

Hinsichtlich des Montageverfahrens des Kompensators wird die Aufgabe durch die Merkmale des Anspruchs 10 gelöst.

Erfindungsgemäß weist das Verfahren die folgenden Schritte auf:
Befestigen des zweiten Befestigungsabschnitts des Kompensators an dem stromabwärtigen Strömungsabschnitt, so dass der Mittelabschnitt und der erste Befestigungsabschnitt in den stromabwärtigen Strömungsabschnitt hineinragen;
Umstülpen des ersten Befestigungsabschnitts sowie des Mittelabschnitts radial nach innen und hin zum stromaufwärtigen Strömungsabschnitt; und
Befestigen des ersten Befestigungsabschnitts an dem stromaufwärtigen Strömungsabschnitt.

Weitere Merkmale und Vorteile der Erfindung ergeben sich aus der nachfolgenden Beschreibung eines bevorzugten Ausführungsbeispiels der vorliegenden Erfindung, anhand der Figuren, die erfindungswesentliche Einzelheiten zeigen, sowie aus den Ansprüchen. Die einzelnen Merkmale können je einzeln oder zu mehreren in beliebiger Kombination bei einer Variante der Erfindung verwirklicht sein.

### Kurze Beschreibung der Zeichnungen

Fig. 1 zeigt eine schematische Schnittansicht eines bevorzugten Ausführungsbeispiels der erfindungsgemäßen Kompensatoranordnung;
Fig. 2A und Fig. 2B zeigen Seitenansichten des nicht verbauten Kompensators gemäß dem Ausführungsbeispiel in einem nicht umgestülpten Zustand bzw. einem umgestülpten Zustand;
Fig. 3 zeigt eine Draufsicht auf den Kompensator gemäß dem ersten Ausführungsbeispiel in einem nicht umgestülpten Zustand;
Fig. 4 zeigt eine schematische Schnittansicht der Kompensatoranordnung gemäß dem Ausführungsbeispiel, in der ein Ausgleich eines Versatzes in Längs- und in Querrichtung zwischen den Strömungsabschnitten dargestellt ist; und
Fig. 5 zeigt eine schematische Schnittansicht der Kompensatoranordnung gemäß dem Ausführungsbeispiel, in der ein Ausgleich einer Verkippung zwischen den Strömungsabschnitten dargestellt ist.

### Detaillierte Beschreibung bevorzugter Ausführungsbeispiele

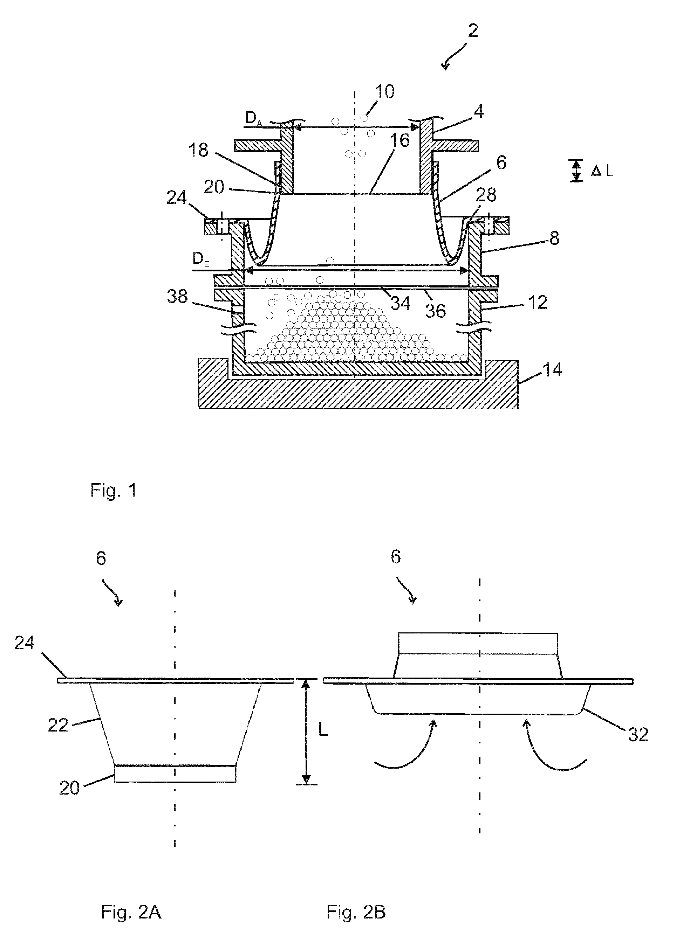

In Fig. 1 ist ein erstes Ausführungsbeispiel der vorliegenden Erfindung dargestellt.

Zu sehen ist dabei eine Kompensatoranordnung 2, bei der ein stromaufwärtiger Strömungsabschnitt 4 über einen im Wesentlichen schlauchförmigen Kompensator 6 mit einem stromabwärtigen Strömungsabschnitt 8 verbunden ist. Die Strömungsabschnitte 4, 8 stellen einen Teil eines vertikalen, rohrförmigen Zuleitungssystems dar, mit dem schüttfähiges Material 10 einem Wägebehälter 12 von oben zugeführt und über eine Wägevorrichtung 14 gewogen werden kann, wobei der Kompensator 6 einen Abstand ΔL zwischen den Strömungsabschnitten 4, 8 ausgleicht. Die Strömungsabschnitte 4, 8 sind dabei aus Metall und der Kompensator aus Silikon hergestellt.

Der stromaufwärtige Strömungsabschnitt 4 ist zylinderförmig ausgebildet und in seiner Axialrichtung vertikal ausgerichtet. An einem unteren Ende weist der stromaufwärtige Strömungsabschnitt 4 einen Austritt 16 mit einem im Wesentlichen kreisförmigen Öffnungsquerschnitt D_{A} auf. Der Austritt 16 ist von einem kreiszylindrisch ausgebildeten, austrittsseitigen Endabschnitt 18 des stromaufwärtigen Strömungsabschnitts 4 umgeben.

An den austrittsseitigen Endabschnitt 18 schließt sich der Kompensator 6 an, der in einem in Fig. 2A gezeigten, nicht eingebauten Zustand eine im Wesentlichen konische Grundform aufweist und einstückig aus Silikon hergestellt ist. Der Kompensator 6 weist drei Hauptabschnitte auf. Ein erster Abschnitt besteht aus einem oberen Befestigungsabschnitt 20, der rohrförmig ausgeführt ist. Dieser Abschnitt ist zur Befestigung an dem stromaufwärtigen Strömungsabschnitt 4 vorgesehen. Ein zweiter, mittlerer Abschnitt 22 des Kompensators 6 ist als konischer Schlauch ausgeführt. Dieser Abschnitt übernimmt die Funktion der Überbrückung der beiden Strömungsabschnitte und kann Relativbewegungen zwischen den Strömungsabschnitten ausgleichen. Der dritte Abschnitt besteht aus einem unteren flanschförmigen Befestigungsabschnitt 24, wobei dieser denselben Öffnungsquerschnitt aufweist wie ein Öffnungsquerschnitt D_{E} eines Eintritts 28 an dem stromabwärtigen Strömungsabschnitt 8. Dieser Abschnitt 24 ist zur Befestigung an dem stromabwärtigen Strömungsabschnitt 8 vorgesehen. Die Befestigungsabschnitte 20, 24 sind dabei verstärkt ausgeführt, um ein Reißen des Materials an diesen Stellen zu verhindern. Der mittlere Abschnitt 22 weist im Vergleich zu den Befestigungsabschnitten 20, 24 eine dünnere Wandstärke auf, da dieser Abschnitt sehr flexibel sein muss, um einen kräftefreien Ausgleich von Relativbewegungen zwischen den Strömungsabschnitten 4, 8 zu ermöglichen. In der Praxis hat es sich dabei herausgestellt, dass eine Wandstärke von etwa 2 mm für den oberen Befestigungsabschnitt 20, eine Wandstärke von etwa 1,5 mm für den mittlerer Abschnitt 22 und eine Wandstärke von etwa 3 mm für den unteren Befestigungsabschnitt 24 geeignet ist.

Zur Montage des Kompensators 6 muss zunächst der Flansch 24 des unteren Befestigungsabschnitts 24 auf einen Flansch 30 des stromabwärtigen Strömungsabschnitts 8 aufgesetzt und mit diesem verschraubt werden, wobei in diesem Zustand sowohl der mittlerer Abschnitt 22 als auch der obere Befestigungsabschnitt 20 in den stromabwärtigen Strömungsabschnitt 8 hineinragen. Anschließend werden der obere Befestigungsabschnitt 20 und der mittlere Abschnitt 22 nach innen umgestülpt und zu dem stromaufwärtigen Strömungsabschnitt 4 heraufgezogen (siehe Fig. 2B), woraufhin der obere Befestigungsabschnitt 20 an dem austrittsseitigen Endabschnitt 18 mit einem nicht dargestellten Kabelbinder befestigt wird.

Eine Länge L des Kompensators 6 ist dabei so bemessen, dass sie innerhalb eines vorgegebenen Ausgleichsbereich des Kompensators 6, d.h. innerhalb einer maximal zu erwartenden Abstandsänderung ΔLₘₐₓ zwischen den Strömungsabschnitten 4, 8, stets größer als der Abstand zwischen den beiden Strömungsabschnitten 4, 8 ist. Auf diese Weise ragt der umgestülpte Abschnitt 32 stets in den Eintritt 28 des stromabwärtigen Strömungsabschnitts 8 hinein. Da der Öffnungsquerschnitt D_{A} des Austritts 16 kleiner bemessen ist als der Öffnungsquerschnitt D_{E} des Eintritts 28 und sich der mittlere Abschnitt 22 des Kompensators 6 im eingebauten Zustand nach unten hin konisch aufweitet, ist ein Umstülpen bzw. Abrollen des umgestülpten Abschnitts 32 des Kompensators 6 umso leichter möglich, auch wenn das Material des Kompensators 6 eine gewisse Grundsteifigkeit aufweist. Der umgestülpte Abschnitt 32 hängt durch die sich nach unten aufweitende konische Grundform des mittlerer Abschnitts so in dem stromabwärtigen Strömungsabschnitt 8 durch, dass sich keine Taschen bilden können, in denen sich Material ansammeln kann.

Zudem entsteht durch die konische Form des mittleren Abschnitts 22 in der Zuleitung keine durch das Umstülpen des mittleren Abschnitts 22 bedingte Verengung des Strömungsquerschnitts.

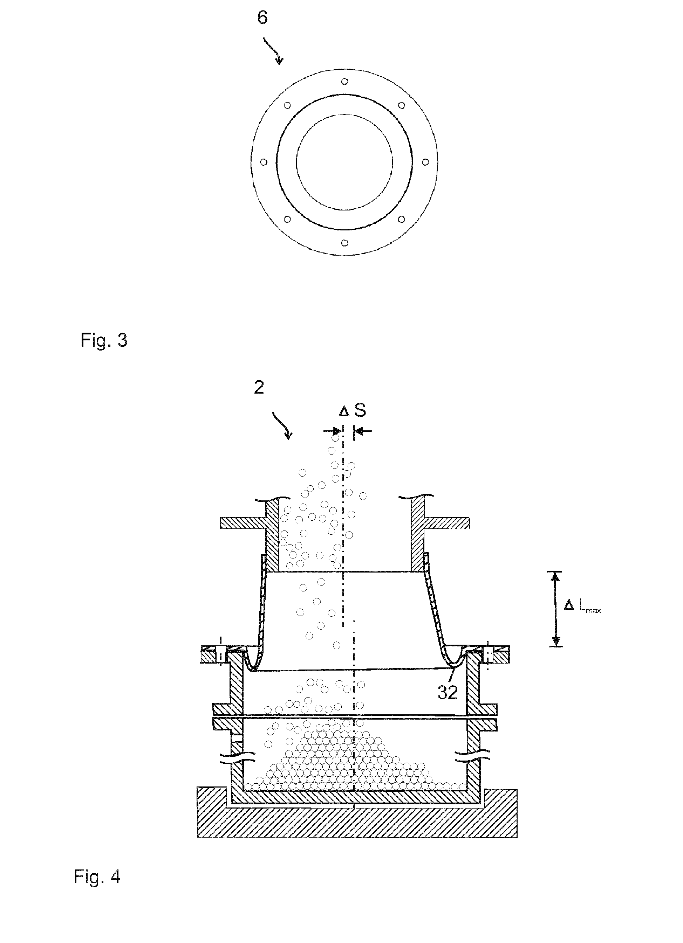

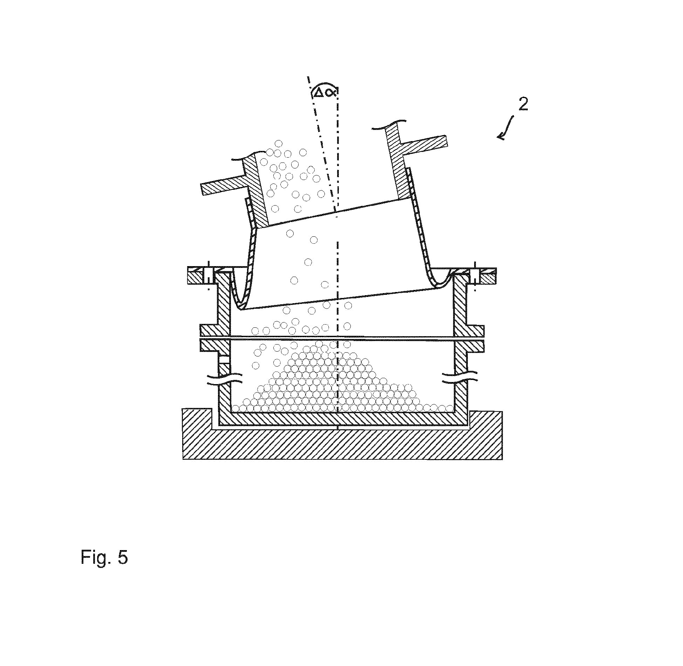

Bei einer Veränderung des Abstands ΔL in axialer Richtung der beiden Strömungsabschnitte 4, 8 kann diese durch ein Abrollen des umgestülpten Abschnitts 32 ausgeglichen werden, ohne dass dabei Kräfte in axialer Richtung zwischen den Strömungsabschnitten 4, 8 übertragen werden. Weiterhin ist ein Ausgleich von lateralen Bewegungen Δs (siehe Fig. 4) oder Veränderungen des Winkels Δα (siehe Fig. 5) der Strömungsabschnitte 4, 8 zueinander möglich.

In Fig. 1 ist der Kompensator in einem montierten Zustand dargestellt, wobei der austrittsseitige Endabschnitt 18 des stromaufwärtigen Strömungsabschnitts 4 von dem zylindrischen oberen Befestigungsabschnitt 20 des Kompensators 6 radial umgriffen wird und der obere Befestigungsabschnitt 20 des Kompensators mit einem nicht dargestellten Kabelband an dem austrittsseitigen Endabschnitt 18 befestigt ist. Das Kabelband ist zu diesem Zweck so angeordnet, dass es den oberen Befestigungsabschnitt 20 des Kompensators 6 radial umgreift und diesen gegen den austrittsseitigen Endabschnitt 18 spannt. Der Flansch 26 des unteren Befestigungsabschnitts 24 ist auf einen Flansch 30 des stromabwärtigen Strömungsabschnitts 8 aufgesetzt und mit diesem verschraubt, wobei in diesem Zustand sowohl der mittlere Abschnitt 22 als auch der obere Befestigungsabschnitt 20 in den stromabwärtigen Strömungsabschnitt 8 hineinragen.

Weiterhin ist in Figur 1 zu sehen, dass der stromabwärtige Strömungsabschnitt 8 ebenfalls zylinderförmig ausgebildet und in seiner Axialrichtung vertikal ausgerichtet ist. An einem oberen Ende des stromabwärtige Strömungsabschnitts 8 ist der Eintritt 28 mit dem im Wesentlichen kreisförmigen Öffnungsquerschnitt D_{E} ausgebildet. Der erste Flansch 30 des stromabwärtigen Strömungsabschnitts 8 ist dabei so ausgebildet, dass eine planare Anschlussfläche 34 bündig mit dem Eintritt 28 abschließt.

Ein unteres Ende des stromabwärtigen Strömungsabschnitts 8 weist eine Auslassöffnung 36 auf, die mit einer Einlassöffnung 40 des Wägebehälters 12 verbunden ist. Weiterhin ist in dem stromabwärtigen Strömungsabschnitt 8 oder dem Wägebehälter 12 eine Druckausgleichsvorrichtung 40 vorgesehen, um zu verhindern, dass sich bei einer Veränderung des Abstands zwischen den Strömungsabschnitten 4, 8 oder während einer Befüllung des Wägebehälters 12 ein Druckunterschied zwischen einem Innenraum der Strömungsabschnitte 4, 8 und einem die Strömungsabschnitte 4, 8 umgebenden Außenraum aufbaut. So kann vermieden werden, dass der umgestülpten Abschnitt 32 durch einen Druckunterschied aus dem stromabwärtigen Strömungsabschnitt 8 herausgedrückt wird, was zu einem Funktionsverlust des Kompensators führen würde, da sich in den nach außen gedrückten Bereichen des Kompensators Schüttgut ansammeln könnte, was einen kräftefreien Ausgleich von Relativbewegungen zwischen den Strömungsabschnitten 4, 8 behindern würde.

In Fig. 4 ist ebenfalls das Ausführungsbeispiel der vorliegenden Erfindung gemäß dem in Fig. 1 beschriebenen dargestellt. Zu sehen ist dabei die Kompensatoranordnung 1, wobei der Abstand zwischen den Strömungsabschnitten 4, 8 eine maximale Abstandsänderung ΔLₘₐₓ ist, wodurch der umgestülpte Abschnitt 32 nicht so weit in den Eintritt 28 des stromabwärtigen Strömungsabschnitts 8 hineinragt wie in Fig. 1 dargestellt. Weiterhin ist ein lateraler Versatz Δs zwischen den Strömungsabschnitten 4, 8 dargestellt, welcher ebenfalls durch den Kompensator 6 ausgeglichen wird.

In Fig. 5 ist ein Winkel Δα zwischen den Längsachsen der Strömungsabschnitte 4, 8 gezeigt, der durch den Kompensator 6 ebenfalls ausgeglichen werden kann.

Anhand der Zeichnungen wurde eine bevorzugte Ausführungsform der Kompensatoranordnung der vorliegenden Erfindung dargestellt. Selbstverständlich sind Abwandlungen der gezeigten Ausführungsform denkbar, ohne den Grundgedanken der Erfindung zu verlassen.

So ist insbesondere denkbar, für den Kompensator ein flexibles Material wie z.B. ein technisches Gewebe oder ein Elastomer zu verwenden.

Bei der bevorzugten Ausführungsform ist die Strömungsrichtung im Wesentlichen in Gravitationsrichtung. Wenn die Kompensatoranordnung vertikal angeordnet ist, hängt der biegeschlaffe Mittelabschnitt des Kompensators gravitationsbedingt von alleine durch und wird so im stromabwärtigen Strömungsabschnitt gehalten. Es ist jedoch auch denkbar, dass die Kompensatoranordnung und die Strömungsrichtung nicht vertikal, sonder schräg ist. Dabei kann z.B. ein etwas steiferes Material für den Kompensator gewählt werden.

So können beispielsweise die Strömungsabschnitte aus Kunststoff oder einem Verbundwerkstoff gefertigt sein.

Weiterhin ist die Verbindung des Kompensators an beiden Enden über einen zylinderförmigen Endabschnitt über Kabelbänder oder auch eine Verbindung beider Enden über kreisringförmige Befestigungsabschnitte und Schraubverbindungen möglich.

Hinsichtlich des Montageverfahrens können die Befestigungsschritte an den Strömungsabschnitten vertauscht werden. Ferner ist denkbar, wenn auch nicht sehr praktikabel, den Kompensator umzustülpen, bevor dieser an den Strömungsabschnitten montiert wird.

## Patentansprüche

1. Kompensatoranordnung (2) mit einem Kompensator (6) zum Verbinden von zwei Strömungsabschnitten (4, 8) und zum Ausgleichen von Relativbewegungen zwischen den Strömungsabschnitten (4, 8) zumindest innerhalb eines vorbestimmten Ausgleichsbereichs (ΔLₘₐₓ, Δs, Δα), **dadurch gekennzeichnet, dass**
der zwischen einem Austritt (16) des stromaufwärtigen Strömungsabschnitts (4) und einem Eintritt (28) des stromabwärtigen Strömungsabschnitts (8) angeordnete Kompensator (6) aus einem biegeschlaffen Material, insbesondere einem weichen Silikon, besteht, im Wesentlichen schlauchförmig ausgebildet ist und mindestens eine solche Länge (L) aufweist, dass ein umgestülpter Abschnitt (32) des Kompensators (6) in den stromabwärtigen Strömungsabschnitt (8) hineinragt und über den gesamten vorbestimmten Ausgleichsbereich (ΔLₘₐₓ, Δs, Δα) darin verbleibt.

2. Kompensatoranordnung (2) nach Anspruch 1, **dadurch gekennzeichnet, dass** der Austrittsquerschnitt (D_{A}) des stromaufwärtigen Strömungsabschnitts (4) kleiner als der Eintrittsquerschnitt (D_{E}) des stromabwärtigen Strömungsabschnitts (8) ist; und
der Kompensator (6) im Wesentlichen konische Grundform aufweist und auf der Seite des stromaufwärtigen Strömungsabschnitts (4) einen kleineren Öffnungsquerschnitt aufweist als auf der Seite des stromabwärtigen Strömungsabschnitts (8).

3. Kompensatoranordnung (2) nach Anspruch 1 oder 2, **dadurch gekennzeichnet, dass** der stromabwärtige Strömungsabschnitt (8) ein Teil einer Wägevorrichtung, insbesondere eines Wägebehälters, ist oder mit einer solchen verbunden ist.

4. Kompensatoranordnung (2) nach einem Ansprüche 1 bis 3, **dadurch gekennzeichnet, dass**
am Eintritt (28) des stromabwärtigen Strömungsabschnitts (8) ein Flansch (30) ausgebildet ist; und
der Kompensator (6) einen flanschförmigen Befestigungsabschnitt (26) aufweist, der mit dem Flansch (30) des stromabwärtigen Strömungsabschnitts (8) verbindbar ist.

5. Kompensatoranordnung (2) nach einem Ansprüche 1 bis 4, **dadurch gekennzeichnet, dass**
am Austritt (16) des stromaufwärtigen Strömungsabschnitts (4) ein kreiszylindrischer Endabschnitt (18) ausgebildet ist; und
der Kompensator (6) einen kreiszylindrischen Befestigungsabschnitt (20) aufweist, der mit kreiszylindrischer Endabschnitt (18) an dem Austritt (16) des stromaufwärtigen Strömungsabschnitts (4), insbesondere mit einem Kabelbinder oder einer Schelle, verbindbar ist.

6. Kompensatoranordnung (2) nach einem Ansprüche 1 bis 5, **dadurch gekennzeichnet, dass** eine Druckausgleichsvorrichtung (38) in einem der Strömungsabschnitte (4, 8) vorgesehen ist.

7. Kompensatoranordnung (2) nach einem Ansprüche 1 bis 6, **dadurch gekennzeichnet, dass** der Kompensator (6) einstückig aus einem einzigen Material oder aus einem Verbundmaterial hergestellt ist.

8. Kompensator (6) zum Verbinden von zwei Strömungsabschnitten (4, 8) und zum Ausgleichen von Relativbewegungen zwischen den Strömungsabschnitten (4, 8) zumindest innerhalb eines vorbestimmten Ausgleichsbereichs (ΔLₘₐₓ, Δs, Δα) mit einem ersten Befestigungsabschnitt (20), der an dem stromaufwärtigen Strömungsabschnitt (4) befestigbar ist, und einem zweiten Befestigungsabschnitt (24), der an dem stromabwärtigen Strömungsabschnitt (8) befestigbar ist, ferner **gekennzeichnet durch**
einen konisch ausgebildeten Mittelabschnitt (22), wobei
Material und Wandstärke zumindest des Mittelabschnitts (22) so gewählt sind, dass sich der Kompensator (6) umstülpen lässt; und
der Kompensator (6) sowohl im umgestülpten als auch nicht umgestülpten Zustand an den entsprechenden Strömungsabschnitten (4, 8) befestigbar ist und **durch** kräftefreies Abrollen des umgestülpten Abschnitts einen kräftefreien Ausgleich von Relativbewegungen zwischen den Strömungsabschnitten (4, 8), insbesondere einen Längenausgleich, ermöglicht.

9. Kompensator nach Anspruch 8, **dadurch gekennzeichnet, dass**
der erste Befestigungsabschnitt (20) zur Verbindung mit dem stromaufwärtigen Strömungsabschnitt (4) einen, insbesondere verstärkten, bundförmigen Endabschnitt (20) und der zweite Befestigungsabschnitt (22) zur Verbindung mit dem stromabwärtigen Strömungsabschnitt (8) einen, insbesondere verstärkten, flanschförmigen Endabschnitt (24) aufweist.

10. Verfahren zum Befestigen eines Kompensators (6) nach Anspruch 8 oder 9 zwischen zwei Strömungsabschnitten (4, 8), **gekennzeichnet durch** die Schritte:
Befestigen des zweiten Befestigungsabschnitts (24) des Kompensators (6) an dem stromabwärtigen Strömungsabschnitt (8), so dass der Mittelabschnitt (22) und der erste Befestigungsabschnitt (20) in den stromabwärtigen Strömungsabschnitt (8) hineinragen;
Umstülpen des ersten Befestigungsabschnitts (20) sowie des Mittelabschnitts (22) radial nach innen und hin zum stromaufwärtigen Strömungsabschnitt (4); und
Befestigen des ersten Befestigungsabschnitts (20) an dem stromaufwärtigen Strömungsabschnitt (4).
